# EUROPÄISCHE PATENTSCHRIFT

(11) **EP 3 815 823 B1**
(45) Veröffentlichungstag und Bekanntmachung des Hinweises auf die Patenterteilung: **01.06.2022**
(21) Anmeldenummer: 20204215.6
(22) Anmeldetag: 27.10.2020
(51) Int. Cl.: B23B 47/28

(54) **BOHRLEHRE FÜR DIE ANORDNUNG UND EINBRINGUNG VON LÖCHERN ZUR VERDÜBELUNG VON WERKSTÜCKEN**
DRILLING JIG FOR ARRANGING AND DRILLING HOLES FOR DOWELS IN WORKPIECES
GABARIT DE PERÇAGE POUR PLACER ET PERCER DES TROUS POUR CHEVILLER DES PIÈCES

(30) Priorität: 28.10.2019 DE 202019105973 U
(43) Veröffentlichungstag der Anmeldung: 05.05.2021
(73) Patentinhaber: Bartl, Olaf, 78333 Stockach (DE)
(72) Erfinder: Bartl, Olaf, 78333 Stockach (DE)
(74) Vertreter: Straub, Bernd

(56) Entgegenhaltungen:
- EP-A2- 0 050 210
- DE-U1-202007 015 457
- DE-U1-202013 007 285
- US-A- 3 807 889

## Beschreibung

### TECHNISCHES GEBIET

Die Erfindung betrifft eine Bohrlehre für die Anordnung und Einbringung von Löchern zur Verdübelung von Werkstücken, insbesondere von Holzwerkstoffen.

### STAND DER TECHNIK

Aus dem Deutschen Gebrauchsmuster DE 201 02 484 U1 ist eine Bohrlehre zum Verdübeln von Rahmen und Platten bekannt. Diese zeigt eine Bohrlehre aus massivem Stahl mit einem Vierkantquerschnitt und einer Vielzahl von Bohrführungslöchern unterschiedlicher Position und unterschiedlicher Durchmesser. Zum Fixieren der Bohrlehre sind plattenartige Anschläge vorgesehen, die mittels Rastbolzen mit Federn an der Bohrlehre fixiert werden. Diese Bohrlehre erweist sich als recht unflexibel, denn als Position und Bohrdurchmesser für die Löcher stehen nur die Positionen und Durchmesser der Bohrführungslöcher zur Verfügung.

Aus dem Deutschen Gebrauchsmuster DE 20 2007 015 457 U1 ist eine Schablone gemäß dem Oberbegriff des Anspruchs 1 zum Anreißen und Übertragen von Maßen zum Positionieren von Werkzeugen auf Oberflächen von Bauteilen bekannt, bei der in einem Grundkörper Aufnahmebohrungen in einem zweidimensionalen regelmäßigen Raster angeordnet sind, wobei in die Aufnahmebohrungen Anlageelemente zur Bildung eines Anschlages eingebracht werden können.

Aus dem Deutschen Gebrauchsmuster DE 20 2013 007 285 U1 ist eine weitere Schablone für mindestens eine Lochreihe in einem Werkstück bekannt. Diese zeigt eine Platte mit einer innenliegenden länglichen Aussparung, welche entlang der Längskante eine Vielzahl von Einbuchtungen aufweist, welche zur Positionierung der Schablone verwendet werden können.

Aus der Europäischen Patentanmeldung EP 0 050 210 A2 ist eine Bohrschablone bekannt, die zum Bohren von Lochreihen mit gleichmäßigem Rasterabstand der Löcher und von weiteren standardisierten Bohrlöchern geeignet ist. Sie zeigt eine ebene Grundplatte mit einer erhabenen Führungsschiene, auf der eine Bohrschlittenplatte mit einer Handoberfräse verschiebbar angeordnet ist. Die Bohrschlittenplatte rastet in Passlöcher auf der Oberseite der Führungsschiene, die den gleichen Rasterabstand wie die zu bohrenden Löcher aufweist, ein. Die weiteren Löcher in der Grundplatte dienen zur Aufnahme von Anschlagstiften mit denen die Lage der Grundplatte zum Werkstück nach Länge und Breite ausgerichtet werden kann.

Weiterhin ist aus dem US Patent US 3,807,889 A1 eine Bohrschablone bekannt, die eine plattenförmige Struktur aufweist, welche mittels eines aufwändigen Scherenmechanismus in ihrer Breite angepasst werden kann. Mithilfe dieses Scherenmechanismus wird sichergestellt, dass die Führungslöcher in dem Scherenmechanismus stets mittig in der Bohrschablone angeordnet sind und dadurch die Möglichkeit geschaffen ist, die Bohrlöcher mittig in eine Seite des Werkstückes zu positionieren.

Die Bohrlehre der Europäischen Patentanmeldung EP 0 061 022 A1 dient zur Herstellung von Dübellöchern sowie Topfbohrungen in eine Werkstückplatte. Diese Bohrlehre zeigt eine erste Reihe in gleichem Abstand voneinander angeordneter Bohrbuchsen für die Dübellöcher und eine zweite parallele Reihe in gleichem Abstand voneinander angeordneter Bohrungen zum Fixieren oder Zentrieren eines Topfbuchsenwerkzeugs. Ferner sind im Randbereich mehrere Bohrungen zur Aufnahme von Arretierungsstiften für einen Rechts- oder Linksanschlag vorgesehen. Die Arretierungsstifte sind alle identisch ausgebildet. Durch die Auswahl der verwendeten Bohrungen für die Arretierungsstifte lässt sich die Position des eingebrachten Arretierungsstiftes relativ zu den Bohrbuchsen oder den Bohrungen der Reihen variieren. Diese Bohrlehre zeigt einen komplizierten Aufbau, der nur wenig Variation insbesondere hinsichtlich der Abstände zum Arretierungsstift ermöglicht.

Aus dem Patent DD 2010 020 A1 ist eine Dübelloch-Bohrlehre für die Anordnung und Einbringung von Löchern zur Verdübelung von Werkstücken bekannt, welche in einem Grundkörper in einer Reihe angeordnete Bohrbuchsen aufweist, die mit mehreren sich lateral erstreckenden Feldern versehen ist, die symmetrisch angeordnet sind. Die Felder und Endbereiche zeigen eine Vielzahl von Rasterbohrungen, in die wahlweise einheitliche Anschlagbolzen zur Bildung einer einheitlichen Bezugskante für das jeweilige Werkstück eingebracht werden können. Diese Bohrlehre zeigt einen komplizierten Aufbau, der nur wenig Variation insbesondere hinsichtlich der Abstände zu den Anschlagbolzen ermöglicht.

### BESCHREIBUNG DER ERFINDUNG

Der Erfindung liegt die Aufgabe zu Grunde, eine gegenüber dem Stand der Technik verbesserte Bohrlehre anzugeben, die sich durch eine besonders große Variabilität und damit eine besonders vielfältige Anwendungsmöglichkeit auszeichnet.

Die Aufgabe wird erfindungsgemäß mit einer Bohrlehre für die Anordnung und Einbringung von Löchern zur Verdübelung von Werkstücken, insbesondere von Holzwerkstoffen gelöst, welche die im Anspruch 1 angegebenen Merkmale aufweist.

Vorteilhafte Ausgestaltungen der Erfindung sind Gegenstand der Unteransprüche.

Die erfindungsgemäße Bohrlehre ist für die Anordnung und Einbringung von Löchern zur Verdübelung von Werkstücken, insbesondere von Holzwerkstoffen wie Holzplatten vorgesehen und dafür geeignet. Sie weist eine Mehrzahl an Bohrbuchsen auf, die in wenigstens einer Reihe angeordnet sind. Die in den einstückigen Grundkörper der Bohrlehre eingelassenen Bohrbuchsen sind dafür ausgebildet und vorgesehen als Bohrführung zu dienen. Dies erfolgt insbesondere, indem die Bohrbuchsen selbst die Führung für einen Bohrer oder für ein Führungselement bilden, das den Bohrer aufnimmt und diesen führt.

Darüber hinaus zeigt der einstückige Grundkörper der Bohrlehre Rasterbohrungen zur Aufnahme von Anschlagbolzen auf, die zu beiden Seiten einer Reihe von Bohrbuchsen angeordnet sind, wobei diese einen symmetrischen Abstand zu der Reihe zeigen. In die Rasterbohrungen können Anschlagbolzen eingebracht werden, die mit ihrem Aufnahmebereich eine lösbare Verbindung mit der Rasterbohrung eingehen und die mit ihrem Kopfbereich einen Anschlag für das zu bearbeitende Werkstück bilden. Die zu der Bohrlehre gehörenden, austauschbaren Anschlagbolzen zeigen dabei unterschiedliche Größen im Kopfbereich, so dass durch die Verwendung unterschiedlicher Anschlagbolzen in ein und derselben Rasterbohrung ein unterschiedlicher Abstand zwischen den Bohrbuchsen und den anschlagbildenden Anschlagbolzen gegeben ist. Durch das Vorsehen mehrerer Rasterbohrungen und das Vorsehen unterschiedlicher Anschlagbolzen mit unterschiedlicher Kopfbereichsgröße beziehungsweise unterschiedlichem Durchmesser des Kopfbereiches gelingt es, eine sehr vielfältig einsetzbare Bohrlehre zu schaffen, die unterschiedliche Abstände und durch die Möglichkeit der Verwendung von Führungselementen in den Bohrbuchsen unterschiedliche Bohrdurchmesser ermöglicht. Dies wird durch die symmetrische Anordnung der Rasterbohrungen um die Reihe der Bohrbuchsen noch erhöht. Insbesondere ist es nun möglich, bei einer Anordnung von zwei Anschlagbolzen in symmetrisch zueinander angeordneten Rasterbohrungen einen beidseitigen Anschlag zum ortsfesten Einbringen eines Werkstückes zu schaffen, wobei hier der Abstand der Anschläge der Anschlagbolzen weitgehend der Dicke des Werkstückes entspricht. Vorzugweise sind die Rasterbohrungen differenziert zu den Bohrbuchsen ausgebildet, so dass eine Verwechslung der Ausnehmungen verhindert ist.

Dabei hat es sich besonders bewährt, den Grundkörper einstückig auszubilden.

Dabei hat es sich besonders bewährt, die Anschlagbolzen so auszubilden, dass sie im Aufnahmebereich ein Verbindungselement aufweisen, welches mit einem korrespondierenden Verbindungselement in einer Rasterbohrung eine lösbare Verbindung bildet. Durch die lösbare Verbindung ist es möglich, Anschlagbolzen mit verschiedenem Durchmesser im Kopfbereich gegeneinander auszutauschen und dadurch die unterschiedlichen Abstände für die einzubringenden Löcher festzulegen beziehungsweise abhängig von der Größe und der Form des Werkstückes unterschiedlich viele insbesondere unterschiedliche Anschlagbolzen in den verschiedenen Positionen der Rasterbohrungen im Grundkörper einzubringen. Gerade die Möglichkeit der Einbringung unterschiedlich großer Anschlagbolzen in verschiedenen Rasterbohrungen aus den symmetrisch angeordneten Rasterbohrungen ermöglicht es, auch in schwierige Konturen des Werkstückes insbesondere in gekrümmten Werkstücken an spezifischen, effizienten und geeigneten Stellen Löcher vorzusehen. Dies ermöglicht eine Erweiterung des Einsatzes der Bohrlehre nicht nur in geraden insbesondere rechtwinkligen Werkstücken, sondern auch in dreidimensional geformten Werkstücken. Dabei hat es sich besonders bewährt, wenn die Fläche des Werkstückes, in die die Löcher eingebracht werden sollen, in einer planen Ebene verläuft.

Dabei haben sich insbesondere lösbare Verbindungen, die als Schraubgewinde oder als Rastverbindung insbesondere als Bajonettverbindung ausgebildet sind, besonders bewährt, da sie einfach und sicher zu handhaben sind und eine sichere Positionierung des Anschlagbolzens in der Rasterbohrung und damit des durch den Anschlagbolzen definierten Anschlages in der Bohrlehre gewährleisten.

Darüber hinaus hat es sich besonders bewährt, alle Rasterbohrungen mit dem gleichen Verbindungselement zu versehen, wodurch eine besonders einfache Handhabung und eine ausgesprochen große Flexibilität für das Einbringen von Anschlagbolzen in die Rasterbohrungen erreicht ist. Dies führt zu einer ausgesprochen großen Variabilität und führt zu besonders vielfältigen Anwendungsmöglichkeiten der weitergebildeten Bohrlehre.

Ergänzend hat es sich besonders bewährt, wenigstens eine Anordnung aus zwei Anschlagbolzen vorzusehen, die in zwei Rasterbohrungen der bezüglich der Reihe gegenüberliegenden, symmetrisch zueinander angeordneten Rasterbohrungen eingebracht sind. Dadurch ist es nun möglich, einen beidseitigen Anschlag zum ortsfesten Einbringen eines Werkstückes zu schaffen, wobei hier der Abstand der Anschläge der Anschlagbolzen weitgehend der Dicke des Werkstückes entspricht. Diese Ausbildung der Bohrlehre mit den bezüglich der Reihe gegenüberliegend angeordneten zwei Anschlagbolzen ermöglicht somit eine sehr sichere Positionierung der Bohrlehre bezüglich des Werkstückes und damit der zu schaffenden Löcher in dem Werkstück. Dies ist durch die Variabilität der Bohrlehre mit den verschiedenen, bezüglich des Abstands zur Reihe der Bohrbuchsen symmetrisch angeordneten Rasterbohrungen und der unterschiedlich großen Anschlagbolzen sinnvoll erst möglich.

Als besonders bevorzugte Bohrlehre hat sich eine Bohrlehre gezeigt, die Anschlagbolzen mit im Kopfbereich kreisrundem Querschnitt zeigt, wobei insbesondere die Anschlagbolzen im Kopfbereich eine zylinderförmige Struktur mit über ihre Längsausdehnung im Wesentlichen einheitlichem Querschnitt aufweisen. Vorzugsweise ist im Kopfbereich der Anschlagbolzen am oberen Rand einer Fase vorgesehen, durch die die Handhabung der Bohrlehre mit Anschlagbolzen weiter vereinfacht wird und das Risiko einer Beschädigung des Werkstücks oder das Verletzungsrisiko bei der Handhabung verringert wird.

Eine besonders bevorzugte Ausbildung der Erfindung zeigt Anschlagbolzen mit unterschiedlichem Durchmesser im Kopfbereich, die zumindest im Kopfbereich unterschiedliche Farben und/oder unterschiedliche Materialien zeigen, die ein einfaches insbesondere unmittelbares Unterscheiden der Anschlagbolzen mit unterschiedlicher Größe wie unterschiedlichem Durchmesser im Kopfbereich ermöglichen. Dies führt zu einer besonders sicheren und vereinfachten Handhabung dieser weitergebildeten Bohrlehre. Neben der Möglichkeit, bevorzugt nur den Kopfbereich entsprechend differenziert und entsprechend einfach unterscheidbar zu machen, besteht auch die Möglichkeit, den vollständigen Anschlagbolzen einheitlich mit einer differenzierenden Farbe und/oder einem differenzierenden Material auszubilden, was die Unterscheidbarkeit und damit die Handhabung weiter verbessert und zudem die Fertigung des Anschlagbolzens vereinfacht. Dabei kann die unterschiedliche Farbe durch nachträglich aufgebrachte Farbstoffe oder durch chemische Behandlung des Werkstoffes des Anschlagbolzens gebildet sein. Als Materialien insbesondere differenzierende Materialien für den Anschlagbolzen haben sich insbesondere Metall insbesondere Aluminium, Stahl, Messing, oder Hartkunststoff insbesondere Teflon oder faserverstärkter Kunststoff bewährt. Diese bevorzugte Materialauswahl stellt sicher, dass eine ausreichende Steifigkeit und Dauerhaftigkeit der Anschlagbolzen gewährleistet ist, was die Qualität der Bohrlehre dauerhaft sicherstellt. Dabei ist der Stahl bevorzugt ein gehärteter Stahl oder ein hochlegierter Edelstahl.

Weiterhin hat es sich bewährt, den Grundkörper der Bohrlehre aus Metall insbesondere Aluminium, Stahl, Messing, oder Hartkunststoff insbesondere Teflon oder faserverstärktem Kunststoff auszubilden. Dabei ist der Stahl bevorzugt ein gehärteter Stahl oder ein hochlegierter Edelstahl. Diese bevorzugte Materialauswahl stellt sicher, dass eine ausreichende Steifigkeit und Dauerhaftigkeit des Grundkörpers der Bohrlehre gewährleistet ist, was dazu führt, dass die verschiedenen Bohrungen und Buchsen in dem Grundkörper in ihrer Lage auch unter schwierigen Bedingungen dauerhaft erhalten bleiben.

Als besonders vorteilhaft hat es sich erwiesen, wenn die Anschlagbolzen und der Grundkörper aus dem gleichen Material gebildet sind. Dadurch gelingt es, das Risiko einer Korrosion an den Kontaktstellen zwischen Grundkörper und Anschlagbolzen im Bereich der Rasterbohrungen zu reduzieren und dadurch die Handhabbarkeit dauerhaft zu gewährleisten.

Nach einer bevorzugten Weiterbildung der Bohrlehre weist die Bohrlehre ein Fixierelement zum Befestigen der Bohrlehre an einem Werkstück auf, wobei dieses Fixierelement die Möglichkeit schafft, die Bohrlehre nicht nur durch das Anschlagen an den Anschlagbolzen und den Grundkörper insbesondere verschieblich zu positionieren, sondern diese in einer gewählten Position, gegebenenfalls ohne Anschlag, an dem Werkstück zu fixieren und mit Hilfe der vorhandenen Bohrbuchsen Löcher an den vorgesehenen, gewünschten Positionen des Werkstückes einzubringen. Dies erweitert den Einsatzbereich der Bohrlehre insbesondere auf solche Fälle, bei denen nicht im Randbereich sondern zentral in der Fläche eines plattenförmigen Werkstückes Löcher eingebracht werden sollen. Damit erhöht sich die Variabilität der verschiedenen Einsatzmöglichkeiten deutlich.

Dabei hat es sich besonders bewährt, dass das Fixierelement ein Klemmelement, ein Saugelement und/oder ein Loch insbesondere ein Längsloch aufweist. Das Klemmelement beziehungsweise das Saugelement ist dabei mit dem Grundkörper der Bohrlehre so verbunden, dass diese saugend oder klemmend fest, aber lösbar mit dem zu bearbeitenden Werkstück verbunden werden kann und damit die Position der Bohrlehre am Werkstück festlegt. Dieses ermöglicht in vorteilhafter Weise eine Festlegung der Position der Bohrlehre am Werkstück, ohne dass das Werkstück beeinträchtigt oder beschädigt wird. Zeigt das Fixierelement ein Loch oder ein Längsloch im Grundkörper der Bohrlehre, so ist es ermöglicht, mit Hilfe dieses Loches durch das Einbringen beispielsweise einer Schraube, die durch das Loch in das Werkstück eingeschraubt wird, die Bohrlehre an dem Werkstück zu fixieren. Alternativ zu einer Schraube haben sich auch Nägel oder andere Fixierteile bewährt.

Das besonders bevorzugte Längsloch ermöglicht es vorteilhafterweise, die Position der Bohrlehre am Werkstück nach dem Einschrauben vor dem endgültigen Fixieren nachzujustieren und anschließend erst zu fixieren. Dies verbessert die Handhabung erheblich, insbesondere dann, wenn die Längsrichtung des Längsloches insbesondere quer zu der Reihe mit Bohrbuchsen verläuft. Darüber hinaus hat es sich als vorteilhaft erwiesen, das Längsloch in einer Reihe mit Bohrbuchsen anzuordnen. Dies ermöglicht eine sehr schlanke und damit gut handhabbare, sehr variabel einsetzbare Bohrlehre.

In einer besonderen Weiterbildung der Bohrlehre zeigen Bohrbuchsen insbesondere alle Bohrbuchsen einen kreisrunden Querschnitt auf, wobei diese insbesondere ein Schraubgewinde oder eine Rastverbindung oder eine Bajonettverbindung zur verbindenden Aufnahme einer Bohrführung und/oder einer Fixierhilfe aufweisen. Durch den kreisrunden Querschnitt ist die Handhabung der Bohrbuchsen besonders einfach. Durch das fakultative Vorsehen einer Befestigungsmöglichkeit in der kreisrunden Bohrbuchse durch ein Schraubgewinde oder eine Rastverbindung oder eine Bajonettverbindung zur verbindenden Aufnahme einer Bohrführung und/oder einer Fixierhilfe ist es möglich, die eingebrachte Bohrführung und/oder die Fixierhilfe lösbar, aber fest und damit sehr präzise in der Bohrlehre zu positionieren, was zu einem sehr präzisen Positionieren der Löcher in dem Werkstück führt und die Qualität der Bohrlehre hebt.

Nach einer besonders bevorzugten Ausführung der Bohrlehre zeigen alle in einer Reihe angeordneten Bohrbuchsen einen einheitlichen Aufbau. Dies ermöglicht eine Verwendung derselben Aufnahme einer Bohrführung und/oder einer Fixierhilfe und/oder desselben Bohrers in allen diesen Bohrbuchsen, was die Handhabung und die Flexibilität beziehungsweise die Vielfalt der Einsatzmöglichkeiten dieser Bohrlehre erhöht.

Die Bohrführungen, welche in die insbesondere einheitlichen Bohrbuchsen eingebracht werden und als Führung für die Bohrer dienen, sind bevorzugt aus gehärtetem Stahl beziehungsweise aus hochlegiertem Edelstahl gebildet. Sie zeigen dabei eine Außenkontur, die mit der Innenkontur der Bohrbuchsen korrespondiert, so dass das Einbringen in die und das Führen der Bohrführungen in den Bohrbuchsen sicher, ohne relevantes Spiel erfolgen kann. Sie zeigen im Zentralbereich eine Ausnehmung, die die Führung für Bohrer eines bestimmten Bohrdurchmessers (entspricht dem späteren Lochdurchmesser) bildet. Soll ein anderer Lochdurchmesser und damit ein anderer Bohrdurchmesser realisiert werden, wird eine entsprechende andere Bohrführung mit einer anderen Ausnehmung für Bohrer mit anderem Bohrdurchmesser im Zentralbereich gewählt und in die Bohrbuchse als Ersatz für die andere Bohrführung eingesetzt. Die Bohrführungen zeigen teilweise einen Tiefenanschlag, die die Einbohrtiefe für die Löcher beschränken, wobei diese maximale Einbohrtiefe regelmäßig einstellbar ausgebildet ist. Die Bohrführungen zeigen teilweise eine seitliche Öffnung durch welche die durch das Bohren entstanden Späne ausgeworfen werden können.

Bei einer besonders bevorzugten Weiterbildung der Bohrlehre ist die Anzahl der gegenüberliegenden Rasterbohrungen zwischen zwei benachbarten Bohrbuchsen in einer Reihe auf sechs insbesondere auf vier begrenzt. Dadurch gelingt es, bei hoher Variabilität die Stabilität des Grundkörpers, in dem die Bohrbuchsen und die Rasterbohrungen angeordnet sind, hochzuhalten und damit insbesondere Verwindungen oder Verbiegungen des Grundkörpers zu verhindern. Dadurch ist eine unerwünschte Verzerrung der Abstände zwischen Anschlagbolzen und Bohrbuchsen weitgehend ausgeschlossen.

Eine bevorzugte Weiterbildung der Bohrlehre zeigt eine oder mehrere Rasterbohrungen, die in der Reihe der Bohrbuchsen insbesondere im Endbereich der Reihe der Bohrbuchsen oder außerhalb der Reihe der Bohrbuchsen angeordnet sind. Dadurch wird die Möglichkeit geschaffen, einen zusätzlichen Anschlag für das Werkstück in Richtung der Reihe aus Bohrbuchsen zu schaffen und damit einen Anschlag in einer weiteren Dimension für das Werkstück zu schaffen. Dies verbessert die Handhabung und die Flexibilität beziehungsweise die Vielfalt der Einsatzmöglichkeiten dieser Bohrlehre.

Eine besonders bevorzugte Weiterbildung dieser Bohrlehre zeigt neben der einen oder den mehreren Rasterbohrungen, die in der Reihe der Bohrbuchsen im Endbereich außerhalb der Reihe der Bohrbuchsen angeordnet sind, eine Positionierung der Reihe der Bohrbuchsen so, dass diese sich mittig entlang der Längsausdehnung des Grundkörpers erstreckt. Dadurch wird es möglich, dass auch bei schräg verlaufenden Endflächen eine passgenaue Positionierung der Löcher erfolgen kann.

Vorzugsweise können eine oder mehrere insbesondere alle Rasterbohrungen und/oder eine oder mehrere insbesondere alle der in einer Reihe angeordneten Bohrbuchsen von der Vorderseite und von der Rückseite des Grundkörpers der Bohrlehre mit Anschlagbolzen oder Bohrführungen oder Fixierhilfen beaufschlagt werden. Diese beidseitige Nutzungsmöglichkeit insbesondere die simultan beidseitige Nutzungsmöglichkeit vergrößert die Einsatzmöglichkeit der Bohrlehre weiter.

Eine besonders bevorzugte Weiterbildung der Bohrlehre zeigt wenigstens drei insbesondere alle in einer Reihe angeordneten Bohrbuchsen, die paarweise gleichen Abstand zueinander zeigen. Durch diese Ausbildung ist es möglich, die äußeren beiden Bohrbuchsen der drei Bohrbuchsen, die ein solch beabstandetes Tripel aus Bohrbuchsen bilden, zur Festlegung eines äußeren Abstandes zu verwenden und die mittlere Bohrbuchse zur Festlegung der Mitte in diesem äußeren Abstand zu verwenden.

Werden die äußeren Bohrbuchsen an den gegenüberliegenden Seiten eines Werkstücks angeordnet, so ist es durch diese weitergebildete Bohrlehre möglich, die Mitte zwischen diesen Seitenpositionen des Werkstückes und damit bei parallelen Seiten die Mitte des Werkstückes zu bestimmen und diese zu markieren oder an dieser Stelle ein Loch mit Hilfe der mittleren Bohrbuchse einzubringen. Diese Bohrlehre kann bei allen Werkstückgrößen kleiner als der äußere Abstand verwendet werden. Gerade beim Einbringen von Löchern in die Schmalseite eines Werkstückes ist diese Bohrlehre besonders nützlich, da durch die mittige Anordnung des Loches ein besonders wenig geschwächtes Werkstück erreicht werden kann.

Daneben hat es sich als besonders vorteilhaft erwiesen, die Bohrlehre mit einem Querriegel zu versehen, der senkrecht zur Reihe ausgerichtet ist und einen Anschlag für das Werkstück bildet, wobei dieser insbesondere von der Bohrlehre lösbar ausgebildet ist. Dabei ist der Querriegel insbesondere an einem Ende des Grundkörpers der Bohrlehre angeordnet und erstreckt sich somit lateral zur Längsausrichtung des Grundkörpers der Bohrlehre insbesondere senkrecht dazu. Gerade durch eine lösbare Befestigung des Querriegels ist es möglich, die Befestigungsposition des Querriegels auf dem Grundkörper der Bohrlehre insbesondere abhängig von der Größe des zu bearbeitenden Werkstückes zu wählen. Dies erweitert den Einsatzbereich der Bohrlehre insbesondere auf solche Fälle, bei denen nicht im Randbereich sondern zentral in der Fläche eines plattenförmigen Werkstückes Löcher eingebracht werden sollen. Damit erhöht sich die Variabilität der verschiedenen Einsatzmöglichkeiten deutlich.

Eine besonders bevorzugte Weiterbildung der Bohrlehre ist mit einem in Richtung der Reihe aus Bohrbuchsen verschieblichen Anschlagkörper versehen. Dabei ist der Anschlagkörper mit dem Grundkörper lösbar verbunden. Der verschiebliche Anschlagkörper bildet einen Längsanschlag für das zu bearbeitende Werkstück und kann erfindungsgemäß in Längsrichtung der Reihe aus Bohrbuchsen verschoben und an der gewünschten Stelle fixiert werden. Diese Fixierung, die bei Bedarf gelöst werden kann, wird bevorzugt mit Hilfe einer Schraube realisiert, die in eine der Ausnehmungen des Grundkörpers, sei es eine Bohrbuchse oder eine Rasterbohrung eingeschraubt werden kann und damit den Anschlagkörper in seiner Längspositionierung gegenüber dem Grundkörper der Bohrlehre fixieren kann.

Besonders vorteilhaft hat es sich erwiesen, den Anschlagkörper mit einem Längsloch parallel zu der Reihe aus Bohrbuchsen insbesondere in Verlängerung der Reihe zu versehen und dadurch die Möglichkeit zu schaffen, dass der Anschlagkörper bei eingebrachter Schraube entlang des Längsloches und dadurch begrenzt verschoben und mit Hilfe der Schraube bei Bedarf fixiert werden kann. Dadurch ist eine besonders vorteilhafte stufenlose Verschiebung des Anschlagkörpers relativ zum Grundkörper der Bohrlehre ermöglicht und damit ein besonders weiter Einsatz ermöglicht.

Alternativ zu der Schraube haben sich auch andere Fixiermöglichkeiten bewährt beispielsweise durch Klemmen oder durch Einsetzen eines Stiftes in der Art eines Bolzens.

Bevorzugt bilden die Schraube und/oder der Bolzen insbesondere mit ihrem den Anschlagkörper überstehenden Teil einen Längsanschlag für ein zu bearbeitendes Werkstück, wobei der Längsanschlag wiederum bevorzugt mittig in Verlängerung der Reihe aus Bohrbuchsen angeordnet ist. Dadurch ist eine sehr kompakte und wenig anfällige Möglichkeit zur Ausbildung eines Längsanschlages geschaffen.

Vorzugsweise ist der Anschlagkörper U-förmig im Querschnitt ausgebildet und umschließt den Grundkörper der Bohrlehre in Querrichtung, so dass eine Längsführung des Anschlagkörpers entlang des Grundkörpers und damit in Längsrichtung der Reihe aus Bohrbuchsen in besonderen Maß sichergestellt ist. Umschließt der Anschlagkörper auch teilweise die Unterseite des Grundkörpers, so ist eine besonders sichere Führung gewährleistet.

In einer besonders bevorzugten Ausbildung dieser Weiterbildung ist am Grundkörper der Bohrlehre eine Skala angeordnet, mit deren Hilfe ein Maß der Längsverschiebung erfasst und damit die Positionierung des Anschlagkörpers relativ zum Grundkörper bestimmt werden kann. Dadurch ist es möglich, die Einstellung der Längsverschiebung besonders gut handhabbar zu gestalten.

Die Erfindung wird nachfolgend anhand bevorzugter Ausführungsbeispiele unter Bezugnahme auf die Abbildungen beispielhaft erläutert. Die Erfindung ist nicht auf diese bevorzugten Ausführungsbeispiele beschränkt.
- Fig. 1: zeigt in einer schematischen Darstellung eine beispielhafte Bohrlehre mit Anschlagbolzen in einer Draufsicht von oben,
- Fig. 2: zeigt in einer schematischen Schnittdarstellung die in Fig. 1 dargestellte Bohrlehre mit Anschlagbolzen entlang der Linie A-A,
- Fig. 3: zeigt in einer schematischen Schnittdarstellung die in Fig. 1 dargestellte Bohrlehre mit Anschlagbolzen und Bohrführungen entlang der gestuften Linie H-H und
- Fig. 4: zeigt mehrere beispielhafte Anschlagbolzen in einer schematischen, längsgeschnittenen Darstellung.

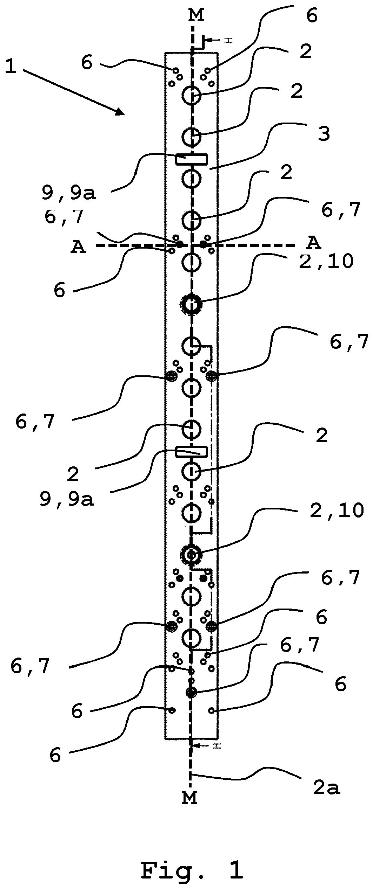

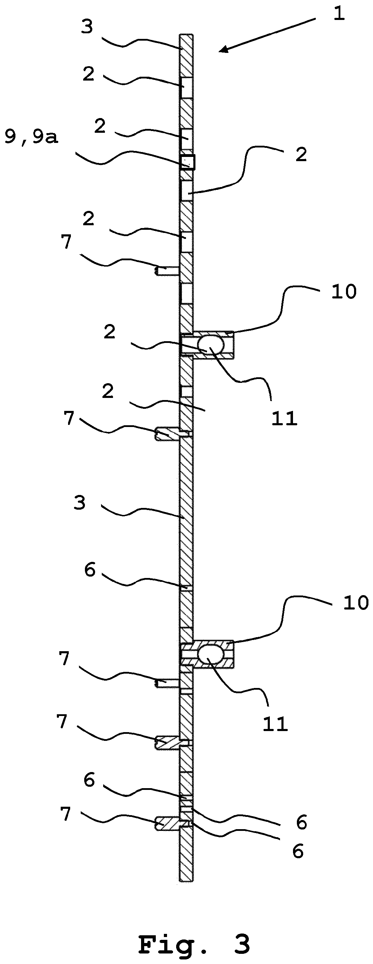

In Fig. 1 ist eine beispielhafte Bohrlehre 1 mit Anschlagbolzen 7 in einer Draufsicht von oben schematisch dargestellt und in Fig. 3 ist diese Bohrlehre 1 in einer schematischen Schnittdarstellung mit Anschlagbolzen und Bohrführungen entlang der gestuften Linie H-H aus Fig. 1 dargestellt.

Die Bohrlehre 1 ist für die Anordnung und Einbringung von Löchern zur Verdübelung von Werkstücken insbesondere von Holzwerkstoffen wie Spanplatten vorgesehen und dafür ausgebildet. Sie zeigt mehrere in einer Reihe 2a angeordnete Bohrbuchsen 2. Diese Bohrbuchsen 2 sind in einen quaderförmigen Grundkörper 3 der Bohrlehre 1 eingelassen und dafür ausgebildet und vorgesehen, als Bohrführung zu dienen. Die in der Reihe 2a angeordneten Bohrbuchsen 2 sind über die Länge des Grundkörpers 3 mit gleichmäßigen Abständen verteilt und bezüglich der Breite mittig in dem Grundkörper 3 angeordnet. Dadurch sind die Längskanten des Grundkörpers 3 parallel zu der Reihe 2a ausgerichtet.

Dabei ist der Abstand der Mitten der Bohrbuchsen 2 mit 32mm gewählt.

Der Grundkörper 3 zeigt mehrere Rasterbohrungen 6 zur Aufnahme von Anschlagbolzen 7, die an verschiedenen Stellen des Grundkörpers 3 angeordnet sind, wobei mehrere Rasterbohrungen 6 zwischen zwei benachbarten Bohrbuchsen 2 angeordnet sind. Dabei sind sie zu beiden Seiten der Reihe 2a so angeordnet, dass diese bezüglich des Abstandes zu der Reihe 2a symmetrisch angeordnet sind. Dabei fällt die Reihe 2a mit Bohrbuchsen 2 mit einer Mittellinie M-M zusammen, die sich über die Länge des Grundkörpers 3 der Bohrlehre 1 erstreckt und diesen Grundkörper 3 im Wesentlichen symmetrisch oder symmetrisch in zwei gleiche Hälften aufteilt.

Zwischen zwei benachbarten Bohrbuchsen 2 sind dabei sechs Rasterbohrungen 6 zur Aufnahme von Anschlagbolzen 7 ausgebildet. Über die Länge des Grundkörpers 3 der Bohrlehre 1 sind sieben solche symmetrische Anordnungen aus Rasterbohrungen 6 angeordnet und ermöglichen somit eine Vielzahl von geeigneten, unterschiedlichen Anschlagpositionen, die durch die unterschiedlichen Anschlagbolzen 7 vervielfacht werden. Weiterhin sind mehrere Anschlagbolzen 7 dargestellt, die mit ihrem Aufnahmebereich 7a, der zur Aufnahme in einer Rasterbohrung 6 vorgesehen ist, in die Rasterbohrung 6 eingebracht sind. Weiterhin zeigen diese Anschlagbolzen 7 einen Kopfbereich 7b zur Bildung einer Anschlagfläche für das zu bearbeitende Werkstück, wobei diese Kopfbereiche 7b sich über den Grundkörper 3 hinaus erstrecken. Die Kopfbereiche 7b der Anschlagbolzen 7 zeigen teilweise unterschiedliche Durchmesser.

Dabei weisen die Anschlagbolzen 7 jeweils in ihrem Kopfbereich 7b einen kreisrunden Querschnitt und eine zylinderförmige Struktur mit über ihre Längsausdehnung einheitlichem, konstantem Querschnitt auf. Auf der Oberseite der Kopfbereiche 7b ist fakultativ eine Eindrehhilfe beispielsweise in Form einer schlitzförmigen, einer kreuzförmigen oder einer kronenförmigen Ausnehmung 13 zum Einbringen eines korrespondierenden Drehwerkzeuges vorgesehen.

In die Rasterbohrungen 6 können unterschiedliche Anschlagbolzen 7 eingebracht werden, die mit ihrem Aufnahmebereich 7a eine lösbare Verbindung mit der Rasterbohrung 6 eingehen und die mit ihrem Kopfbereich 7b einen Anschlag für das zu bearbeitende Werkstück bilden. Durch die Verwendung unterschiedlicher Anschlagbolzen 7 in ein und derselben Rasterbohrung 6 lassen sich unterschiedliche Abstände zwischen den Bohrbuchsen 2 und den anschlagbildenden Anschlagbolzen 7 ermöglichen. Durch das Vorsehen mehrerer Rasterbohrungen 6 und das Vorsehen unterschiedlicher Anschlagbolzen 7 mit unterschiedlicher Kopfbereichsgröße beziehungsweise unterschiedlichem Durchmesser des Kopfbereiches 7b gelingt es, eine sehr vielfältig einsetzbare Bohrlehre 1 zu schaffen, die unterschiedliche Abstände und durch die Möglichkeit der Verwendung von Führungselementen in den Bohrbuchsen 2 unterschiedliche Bohrdurchmesser ermöglicht. Dies wird durch die symmetrische Anordnung der Rasterbohrungen 6 um die Reihe 2a der Bohrbuchsen 2 noch erhöht. Es ist nun möglich, bei einer Anordnung von zwei Anschlagbolzen 7 in symmetrisch zueinander angeordneten Rasterbohrungen 6 einen beidseitigen Anschlag zum ortsfesten Einbringen eines Werkstückes zu schaffen, wobei hier der Abstand der Anschläge der Anschlagbolzen 7 weitgehend der Dicke des Werkstückes entspricht.

Weiterhin zeigt der Grundkörper 3 der Bohrlehre 1 mehrere Fixierelemente 9, die als Längslöcher 9a ausgebildet sind und in der Reihe 2a mit Bohrbuchsen 2 positioniert sind. Die Fixierelemente 9 dienen zum Befestigen der Bohrlehre 1 an einem Werkstück, so dass anschließend ohne unerwünschtes Verrutschen oder Verschieben der Bohrlehre 1 an der gewünschten Position des Werkstückes Löcher mit Hilfe der Bohrbuchsen 2 eingebracht werden können. Dadurch ist die Nutzung der Bohrlehre auch unter schwierigen Einsatzbedingungen beispielsweise über Kopf oder bei bewegten Werkstücken ermöglicht.

Die beiden Längslöcher 9a sind dabei so orientiert, dass ihre Längsrichtung quer insbesondere senkrecht zu der Reihe 2a mit Bohrbuchsen 2 orientiert ist. Dieses besonders bevorzugte Längsloch 9a ermöglicht es vorteilhafterweise, die Position der Bohrlehre 1 am Werkstück nach dem Einschrauben vor dem endgültigen Fixieren nachzujustieren und anschließend erst zu fixieren. Dies verbessert die Handhabung der Bohrlehre 1 erheblich, insbesondere dann, wenn die Längsrichtung des Längsloches 9a quer zu der Reihe 2a mit Bohrbuchsen 2 verläuft. Dies ermöglicht eine sehr schlanke und damit gut handhabbare, sehr variabel einsetzbare Bohrlehre 1.

In dieser Bohrlehre 1 zeigen alle Bohrbuchsen 2 einen kreisrunden Querschnitt mit identischem Durchmesser auf, wodurch die Handhabung der Bohrbuchsen 2 besonders einfach wird. Dies ermöglicht eine Verwendung derselben Aufnahme einer Bohrführung 10 und/oder einer Fixierhilfe und/oder desselben Bohrers in allen diesen Bohrbuchsen 2, was die Handhabung und die Flexibilität beziehungsweise die Vielfalt der Einsatzmöglichkeiten dieser Bohrlehre 1 erhöht.

Die beiden Bohrführungen 10, welche in die einheitlichen Bohrbuchsen 2 eingebracht sind und als Führung für Bohrer dienen, sind aus gehärtetem Stahl gebildet. Sie zeigen dabei eine Außenkontur, die mit der Innenkontur der Bohrbuchsen 2 korrespondiert, so dass das Einbringen in die und das Führen der Bohrführungen 10 in den Bohrbuchsen 2 sicher, ohne relevantes Spiel erfolgen kann. Sie zeigen im Zentralbereich eine Ausnehmung, die die Führung für Bohrer eines bestimmten Bohrdurchmessers (entspricht dem späteren Lochdurchmesser) bildet. Soll ein anderer Lochdurchmesser und damit ein anderer Bohrdurchmesser realisiert werden, wird eine entsprechende andere Bohrführung 10 mit einer anderen Ausnehmung für Bohrer mit anderem Bohrdurchmesser im Zentralbereich gewählt und in die Bohrbuchse 2 als Ersatz für die andere Bohrführung 10 eingesetzt. Die beiden Bohrführungen 10 zeigen Ausnehmungen für Bohrer mit unterschiedlichen Durchmessern. Die Bohrführungen zeigen zudem eine seitliche Öffnung als Spanauswurf 11, durch welchen die durch das Bohren entstanden Späne ausgeworfen werden können.

In Fig. 1 ist eine Schnittlinie H-H dargestellt, die sich als gestufte Schnittlinie über die Länge des Grundkörpers 3 der Bohrlehre 1 erstreckt. Diese Schnittlinie H-H bildet die Grundlage für die Darstellung der Bohrlehre in Fig. 3. Weiterhin ist in Fig. 1 eine Schnittlinie A-A dargestellt, die sich über die Breite des Grundkörpers 3 der Bohrlehre 1 erstreckt.

Dabei hat es sich besonders bewährt, den Grundkörper 3 der Bohrlehre 1 einstückig aus Aluminium auszubilden. Diese bevorzugte Materialauswahl stellt sicher, dass eine ausreichende Steifigkeit und Dauerhaftigkeit des Grundkörpers 3 der Bohrlehre 1 gewährleistet ist, was dazu führt, dass die verschiedenen Bohrungen 6 und Buchsen 2 in dem Grundkörper 3 in ihrer Lage auch unter schwierigen Bedingungen dauerhaft erhalten bleiben.

Die dargestellte Bohrlehre 1 zeigt eine oder mehrere Rasterbohrungen 6, die in der Reihe 2a der Bohrbuchsen 2 angeordnet sind, wobei diese in Verlängerung der Reihe 2a, also außerhalb der Reihe 2a der Bohrbuchsen 2 angeordnet sind. Dabei ist die Position der außerhalb der Reihe 2a angeordneten Rasterbohrungen 6 so gewählt, dass der Abstand zwischen der Mitte der nächstgelegenen Bohrbuchse 2 und einem den Anschlag bildenden Kopfteil 7b eines in die Rasterbohrung 6 eingebrachten Anschlagbolzens 7 37mm beziehungsweise 21mm beträgt.

Mit diesen Rasterbohrungen 6 wird die Möglichkeit geschaffen, mit Einbringen von Anschlagbolzen 7 einen zusätzlichen Anschlag für das Werkstück in Richtung der Reihe 2a aus Bohrbuchsen 2 zu schaffen und damit einen Anschlag in einer weiteren Dimension für das Werkstück zu ermöglichen. Dies verbessert die Handhabung und die Flexibilität beziehungsweise die Vielfalt der Einsatzmöglichkeiten dieser Bohrlehre 1.

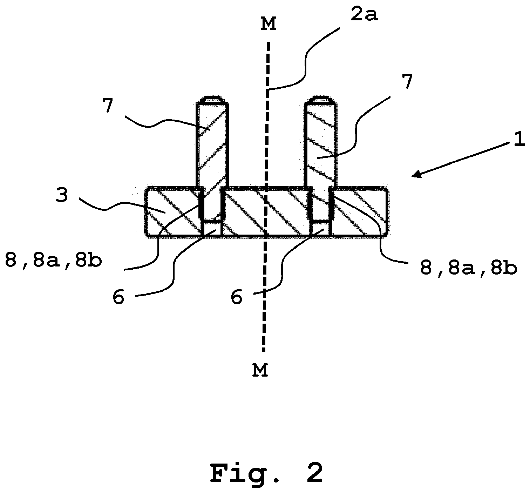

In Fig. 2 ist in einer schematischen Schnittdarstellung die Bohrlehre 1 aus Fig. 1 mit Anschlagbolzen 7 entlang der Linie A-A dargestellt. Es sind zwei Anschlagbolzen 7 gezeigt, die ebenso wie der Grundkörper 3 aus Aluminium gebildet sind und die in Rasterbohrungen 6 eingebracht sind. Die Rasterbohrungen 6 sind in dem Grundkörper 3 symmetrisch bezüglich einer Mittellinie M, die mit der Reihe 2a der Bohrbuchsen 2 zusammenfällt, angeordnet. Die beiden Anschlagbuchsen 7 sind dabei in den inneren beiden Rasterbohrungen 6 angeordnet und mit dem Grundkörper 3 der Bohrlehre 1 lösbar verbunden. Sie bilden eine lösbare Verbindung 8. Diese lösbare Verbindung 8 ist als Schraubverbindung realisiert, indem die Aufnahmebereiche 7a der Anschlagbolzen 7 ein als Schraubgewinde ausgebildetes Verbindungselement 8a zeigen und dieses mit korrespondierenden, als Schraubgewinde in den Rasterbohrungen 6 ausgebildeten Verbindungselementen 8b zusammenwirken. Alle Verbindungselemente 8b der Rasterbohrungen 6 sind einheitlich und damit identisch ausgebildet, so dass der Anschlagbolzen 7 mit dem Verbindungselement 8a im Aufnahmebereich 7a in jede Rasterbohrung 6 lösbar eingebracht werden kann.

Dabei sind alle Rasterbohrungen 6 und alle in einer Reihe 2a angeordneten Bohrbuchsen 2 von der Vorderseite und von der Rückseite des Grundkörpers 3 der Bohrlehre 1 mit Anschlagbolzen 7 oder Bohrführungen oder Fixierhilfen beaufschlagbar.

Die dadurch ermöglichte beidseitige Nutzungsmöglichkeit insbesondere die simultan beidseitige Nutzungsmöglichkeit vergrößert die Einsatzmöglichkeit der Bohrlehre 1 weiter.

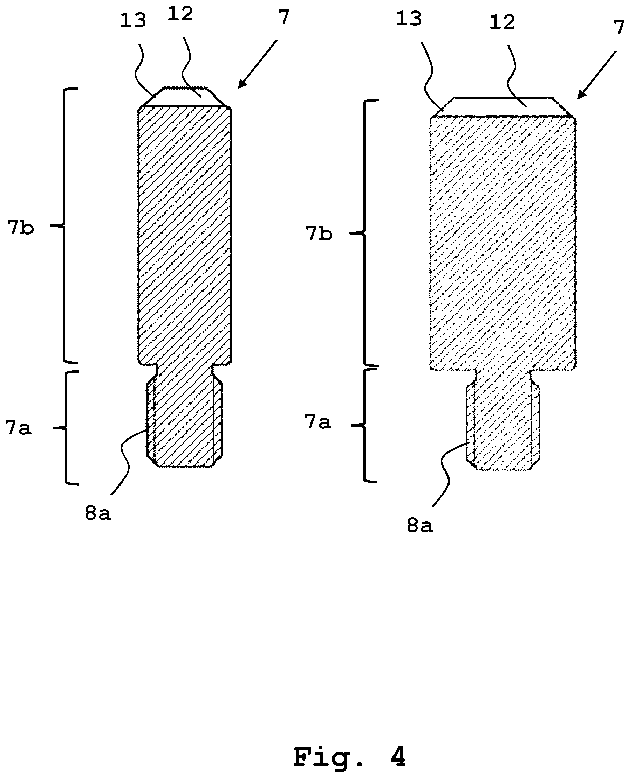

In Fig. 4 sind mehrere beispielhafte Anschlagbolzen 7 in einer schematischen, längsgeschnittenen Darstellung gezeigt. Die dargestellten Anschlagbolzen 7 zeigen einen Aufnahmebereich 7a, der zur Aufnahme in einer Rasterbohrung 6 mittels einer lösbaren Verbindung 8 vorgesehen ist. Dabei ist das im Aufnahmebereich 7a angeordnete Verbindungselement 8a jeweils als ein einheitliches, identisches Schraubgewinde realisiert, welches mit einem korrespondierenden Schraubgewinde, welches das Verbindungselement 8b in den Rasterbohrungen 6 darstellt, zusammenwirken kann und die lösbare Verbindung 8 bildet.

Neben dem Aufnahmebereich 7a zeigen die Anschlagbolzen 7 jeweils einen Kopfbereich 7b. Dieser Kopfbereich 7b zeigt einen kreisrunden Querschnitt und eine zylinderförmige Struktur mit einem über ihre Längsausdehnung einheitlichen, konstanten, gleichbleibenden Querschnitt. Dieser Kopfbereich 7b bildet eine Anschlagfläche für das zu bearbeitende Werkstück.

Die Anschlagbolzen 7 zeigen alle die gleichen Verbindungselemente 8b in den Aufnahmebereichen 7b und sind alle aus demselben Material Aluminium gebildet. Dabei ist die Oberfläche bevorzugt passiviert oder eloxiert.

Im Kopfbereich 7b der Anschlagbolzen 7 ist am oberen Rand einer Fase 12 vorgesehen, durch die die Handhabung der Bohrlehre 1 mit Anschlagbolzen 7 weiter vereinfacht wird und das Risiko einer Beschädigung des Werkstücks oder das Verletzungsrisiko bei der Handhabung verringert wird. Weiterhin ist auf der Oberseite der Kopfbereiche 7b eine Eindrehhilfe in Form einer schlitzförmigen Ausnehmung 13 zum Einbringen eines korrespondierenden Drehwerkzeuges vorgesehen. Dies vereinfacht das Einbringen der Anschlagbolzen 7 wesentlich und verbessert deren Handhabung.

Die dargestellten Anschlagbolzen 7 unterscheiden sich im Durchmesser der Kopfbereiche 7b und ermöglichen dadurch für die Einbringung in eine der verschiedenen Rasterbohrungen 6 eine Variabilität in dem Abstand zu den von der Rasterbohrung 6 beabstandeten Bohrbuchsen 2. Durch die Mehrzahl an möglichen Rasterbohrungen 6 zur Einbringung der verschiedenen Anschlagbolzen 7 multipliziert und damit vervielfältigt sich die Anzahl der Möglichkeiten zur Festlegung einer bestimmten Position von Löchern zur Verdübelung von Werkstücken in dieses Werkstück.

Die in den Figuren dargestellte Bohrlehre 1 mit Anschlagbolzen 7 ermöglicht es durch das Vorsehen mehrerer Rasterbohrungen 6 und das Vorsehen unterschiedlicher Anschlagbolzen 7 mit unterschiedlicher Kopfbereichsgröße beziehungsweise unterschiedlichem Durchmesser des Kopfbereiches 7b, eine sehr vielfältig einsetzbare Bohrlehre 1 zu schaffen, die unterschiedliche Abstände und durch die Möglichkeit der Verwendung von Führungselementen in den Bohrbuchsen 2 unterschiedliche Bohrdurchmesser ermöglicht. Dies wird durch die symmetrische Anordnung der Rasterbohrungen 6 um die Reihe 2a der Bohrbuchsen 2 noch erhöht. Es ist nun möglich, bei einer Anordnung von zwei Anschlagbolzen 7 in symmetrisch zueinander angeordneten Rasterbohrungen 6 einen beidseitigen Anschlag zum ortsfesten Einbringen eines Werkstückes zu schaffen, wobei hier der Abstand der Anschläge der Anschlagbolzen 7 weitgehend der Dicke des Werkstückes entspricht.

### Bezugszeichenliste

- 1: Bohrlehre
- 2: Bohrbuchsen
- 2a: Reihe von Bohrbuchsen
- 3: Grundkörper
- 6: Rasterbohrungen
- 7: Anschlagbolzen
- 7a: Aufnahmebereich eines Anschlagbolzens
- 7b: Kopfbereich eines Anschlagbolzens
- 8: Lösbare Verbindungen zwischen Anschlagbolzen und Rasterbohrungen
- 8a: Verbindungselement am Anschlagbolzen
- 8b: Verbindungselement an der Rasterbohrung
- 9: Fixierelement
- 9a: Längsloch
- 10: Bohrführung
- 11: Spanauswurfsloch
- 12: Fase
- 13: Schlitzförmige Ausnehmung
- M-M: Mittellinie
- A-A: Schnittlinie
- H-H: Gestufte Schnittlinie

## Patentansprüche

1. Bohrlehre (1) für die Anordnung und Einbringung von Löchern zur Verdübelung von Werkstücken, insbesondere von Holzwerkstoffen,
die in einer Reihe (2a) angeordnete Bohrbuchsen (2) aufweist, wobei die in einen Grundkörper (3) eingelassenen Bohrbuchsen (2) dafür ausgebildet und vorgesehen sind als Bohrführung zu dienen,
und Rasterbohrungen (6) zur Aufnahme von Anschlagbolzen (7) aufweist,
mit Anschlagbolzen (7) zum Einbringen in Rasterbohrungen (6) der Bohrlehre (1), wobei die Anschlagbolzen (7) einen Aufnahmebereich (7a) zeigen, der zur Aufnahme in einer Rasterbohrung (6) vorgesehen ist, und die einen Kopfbereich (7b) zur Bildung einer Anschlagfläche zeigen,
wobei Rasterbohrungen (6) symmetrisch zu den in Reihe (2a) angeordneten Bohrbuchsen (2) angeordnet sind, **dadurch gekennzeichnet, dass** Anschlagbolzen (7) mit Kopfbereichen (7b) unterschiedlicher Durchmesser ausgebildet sind.

2. Bohrlehre nach Anspruch 1,
wobei die Anschlagbolzen (7) im Aufnahmebereich (7a) ein Verbindungselement (8a) aufweisen, das mit einem korrespondierenden Verbindungselement (8b) in einer Rasterbohrung (6) eine lösbare Verbindung (8) bildet.

3. Bohrlehre nach einem der Ansprüche 1 oder 2,
wobei alle Rasterbohrungen (6) das gleiche Verbindungselement (8b) aufweisen.

4. Bohrlehre nach einem der Ansprüche 1 bis 3,
wobei wenigstens eine Anordnung aus zwei Anschlagbolzen (7) vorliegt, die in zwei Rasterbohrungen (6) der bezüglich der Reihe (2a) gegenüberliegenden, symmetrisch zueinander angeordneten Rasterbohrungen (6) eingebracht sind.

5. Bohrlehre nach einem der Ansprüche 1 bis 4,
wobei Anschlagbolzen (7) im Kopfbereich (7b) einen kreisrunden Querschnitt zeigen und insbesondere eine zylinderförmige Struktur mit über ihre Längsausdehnung im Wesentlichen einheitlichem Querschnitt aufweisen.

6. Bohrlehre nach einem der Ansprüche 1 bis 5,
wobei die Anschlagbolzen (7) und der Grundkörper (3) aus dem gleichen Material gebildet sind, insbesondere aus Metall oder Hartkunststoff gebildet sind.

7. Bohrlehre nach einem der Ansprüche 1 bis 6, weiterhin aufweisend ein Fixierelement (9) zum Befestigen der Bohrlehre (1) an einem Werkstück.

8. Bohrlehre nach einem der Ansprüche 1 bis 7,
wobei Bohrbuchsen (2) einen kreisrunden Querschnitt zeigen, die insbesondere ein Schraubgewinde oder eine Rastverbindung oder eine Bajonettverbindung zur verbindenden Aufnahme einer Bohrführung und/oder einer Fixierhilfe aufweisen.

9. Bohrlehre nach Anspruch 8,
wobei alle in einer Reihe (2a) angeordneten Bohrbuchsen (2) einen einheitlichen Aufbau zeigen.

10. Bohrlehre nach einem der Ansprüche 1 bis 9,
wobei die Anzahl der gegenüberliegenden Rasterbohrungen (6) zwischen zwei benachbarten Bohrbuchsen (2) in einer Reihe (2a) auf sechs insbesondere auf vier begrenzt ist.

11. Bohrlehre nach einem der Ansprüche 1 bis 10,
wobei eine oder mehrere Rasterbohrungen (6) in der Reihe (2a) insbesondere im Endbereich der Reihe (2a) oder außerhalb der Reihe (2a) angeordnet sind.

12. Bohrlehre nach Anspruch 11,
wobei eine oder mehrere Rasterbohrungen (6) in der Reihe (2a) von Bohrbuchsen (2) außerhalb der Reihe (2a) angeordnet sind und die Reihe (2a) sich mittig längs des Grundkörpers erstreckt.

13. Bohrlehre nach einem der Ansprüche 1 bis 12,
wobei eine oder mehrere Rasterbohrungen (6) und/oder eine oder mehrere der in einer Reihe (2a) angeordneten Bohrbuchsen (2) von der Vorderseite und von der Rückseite des Grundkörpers (29) mit Anschlagbolzen (7) oder Bohrführungen oder Fixierhilfen beaufschlagt werden können.

14. Bohrlehre nach einem der Ansprüche 1 bis 13,
wobei die Bohrlehre mit einem Querriegel versehen ist, der senkrecht zur Reihe (2a) ausgerichtet ist und einen Anschlag für das Werkstück bildet, wobei dieser insbesondere von der Bohrlehre (1) lösbar ausgebildet ist.

15. Bohrlehre nach einem der Ansprüche 1 bis 14,
wobei die Bohrlehre mit einem in Richtung der Reihe (2a) verschieblichen Anschlagkörper versehen ist, der mit dem Grundkörper lösbar verbunden ist, und wobei der Grundkörper insbesondere mit einer Skala versehen ist, die ein Maß der Längsverschiebung des Anschlagkörpers wiedergibt.

## Claims

1. Drilling jig (1) for arrangement and formation of holes for anchoring of workpieces, in particular of wood materials,
which has drilling bushes (2) arranged in a line (2a), wherein the drilling bushes (2), which are incorporated into a main body (3), are configured and intended to be used as a drilling guide,
and has grid-arrangement bores (6) for receiving of stop pins (7),
with stop pins (7) for introduction into grid-arrangement bores (6) of the drilling jig (1), wherein the stop pins (7) exhibit a receiving region (7a) which is intended to be received in a grid-arrangement bore (6), and exhibit a head region (7b) for formation of a stop surface,
wherein grid-arrangement bores (6) are arranged symmetrically with respect to the drilling bushes (2) arranged in a line (2a),
**characterized in that** stop pins (7) are designed with head regions (7b) of different diameters.

2. Drilling jig according to Claim 1,
wherein, in the receiving region (7a), the stop pins (7) have a connecting element (8a) which forms a detachable connection (8) with a corresponding connecting element (8b) in a grid-arrangement bore (6) .

3. Drilling jig according to either of Claims 1 and 2,
wherein all the grid-arrangement bores (6) have the same connecting element (8b).

4. Drilling jig according to one of Claims 1 to 3,
wherein at least one arrangement composed of two stop pins (7) introduced into two grid-arrangement bores (6) of the grid-arrangement bores (6) which, with respect to the line (2a), are situated opposite one another and are arranged symmetrically with respect to one another is present.

5. Drilling jig according to one of Claims 1 to 4,
wherein, in the head region (7b), stop pins (7) exhibit a circular cross section and have in particular a cylindrical structure with a cross section which is substantially uniform over their longitudinal extent.

6. Drilling jig according to one of Claims 1 to 5,
wherein the stop pins (7) and the main body (3) are formed from the same material, in particular are formed from metal or rigid plastic.

7. Drilling jig according to one of Claims 1 to 6, furthermore having a fixing element (9) for fastening of the drilling jig (1) to a workpiece.

8. Drilling jig according to one of Claims 1 to 7,
wherein drilling bushes (2) exhibit a circular cross section which have in particular a screw thread or a latching connection or a bayonet connection for receiving, with connection, of a drilling guide and/or of a fixing aid.

9. Drilling jig according to Claim 8,
wherein all the drilling bushes (2) arranged in a line (2a) exhibit a uniform structure.

10. Drilling jig according to one of Claims 1 to 9,
wherein the number of oppositely situated grid-arrangement bores (6) between two adjacent drilling bushes (2) in a line (2a) is limited to six, in particular to four.

11. Drilling jig according to one of Claims 1 to 10,
wherein one or more grid-arrangement bores (6) are arranged in the line (2a), in particular in the end region of the line (2a), or outside the line (2a).

12. Drilling jig according to Claim 11,
wherein one or more grid-arrangement bores (6) in the line (2a) of drilling bushes (2) are arranged outside the line (2a) and the line (2a) extends centrally along the main body.

13. Drilling jig according to one of Claims 1 to 12,
wherein stop pins (7) or drilling guides or fixing aids can be applied from the front side and from the rear side of the main body (29) at one or more grid-arrangement bores (6) and/or one or more of the drilling bushes (2) arranged in a line (2a).

14. Drilling jig according to one of Claims 1 to 13,
wherein the drilling jig is provided with a transverse bar which is oriented perpendicularly to the line (2a) and which forms a stop for the workpiece, wherein this is formed in particular so as to be detachable from the drilling jig (1).

15. Drilling jig according to one of Claims 1 to 14,
wherein the drilling jig is provided with a stop body which is displaceable in the direction of the line (2a) and which is connected detachably to the main body, and wherein the main body is provided in particular with a scale which depicts a measure of the longitudinal displacement of the stop body.

## Revendications

1. Gabarit de perçage (1) pour l'agencement et l'introduction de trous pour cheviller des pièces, notamment des matériaux à base de bois,
qui comprend des douilles de perçage (2) agencées en une rangée (2a), les douilles de perçage (2) encastrées dans un corps de base (3) étant configurées et prévues pour servir de guide de perçage, et qui comprend des perçages tramés (6) pour recevoir des boulons de butée (7), comprenant des boulons de butée (7) pour être introduits dans des perçages tramés (6) du gabarit de perçage (1), les boulons de butée (7) présentant une zone de réception (7a), qui est prévue pour être reçue dans un perçage tramé (6), et présentant une zone de tête (7b) pour former une surface de butée,
les perçages tramés (6) étant agencés symétriquement par rapport aux douilles de perçage (2) agencées en une rangée (2a), **caractérisé en ce que** les boulons de butée (7) sont configurés avec des zones de tête (7b) de différents diamètres.

2. Gabarit de perçage selon la revendication 1, dans lequel les boulons de butée (7) comprennent dans la zone de réception (7a) un élément de liaison (8a), qui forme une liaison détachable (8) avec un élément de liaison correspondant (8b) dans un perçage tramé (6).

3. Gabarit de perçage selon l'une quelconque des revendications 1 ou 2, dans lequel tous les perçages tramés (6) présentent le même élément de liaison (8b).

4. Gabarit de perçage selon l'une quelconque des revendications 1 à 3, dans lequel au moins un agencement de deux boulons de butée (7) est présent, qui sont introduits dans deux perçages tramés (6) parmi les perçages tramés (6) agencés symétriquement les uns des autres, en vis-à-vis par rapport à la rangée (2a).

5. Gabarit de perçage selon l'une quelconque des revendications 1 à 4, dans lequel les boulons de butée (7) présentent une section transversale circulaire dans la zone de tête (7b) et comprennent notamment une structure cylindrique ayant une section transversale essentiellement uniforme sur leur extension longitudinale.

6. Gabarit de perçage selon l'une quelconque des revendications 1 à 5, dans lequel les boulons de butée (7) et le corps de base (3) sont formés dans le même matériau, notamment en métal ou en matière plastique dure.

7. Gabarit de perçage selon l'une quelconque des revendications 1 à 6, comprenant en outre un élément de fixation (9) pour fixer le gabarit de perçage (1) sur une pièce.

8. Gabarit de perçage selon l'une quelconque des revendications 1 à 7, dans lequel les douilles de perçage (2) présentent une section transversale circulaire, qui comprend notamment un filetage ou une liaison par encliquetage ou une liaison à baïonnette pour la réception avec liaison d'un guide de perçage et/ou d'un auxiliaire de fixation.

9. Gabarit de perçage selon la revendication 8, dans lequel toutes les douilles de perçage (2) agencées en une rangée (2a) présentent une construction uniforme.

10. Gabarit de perçage selon l'une quelconque des revendications 1 à 9, dans lequel le nombre de perçages tramés opposés (6) entre deux douilles de perçage voisines (2) dans une rangée (2a) est limité à six, notamment à quatre.

11. Gabarit de perçage selon l'une quelconque des revendications 1 à 10, dans lequel un ou plusieurs perçages tramés (6) sont agencés dans la rangée (2a), notamment dans la zone d'extrémité de la rangée (2a) ou à l'extérieur de la rangée (2a).

12. Gabarit de perçage selon la revendication 11, dans lequel un ou plusieurs perçages tramés (6) dans la rangée (2a) de douilles de perçage (2) sont agencés à l'extérieur de la rangée (2a) et la rangée (2a) s'étend au milieu le long du corps de base.

13. Gabarit de perçage selon l'une quelconque des revendications 1 à 12, dans lequel un ou plusieurs perçages tramés (6) et/ou une ou plusieurs des douilles de perçage (2) agencées dans une rangée (2a) peuvent être sollicités par des boulons de butée (7) ou des guides de perçage ou des auxiliaires de fixation depuis le côté avant et depuis le côté arrière du corps de base (29).

14. Gabarit de perçage selon l'une quelconque des revendications 1 à 13, dans lequel le gabarit de perçage est pourvu d'un verrou transversal, qui est orienté perpendiculairement à la rangée (2a) et qui forme une butée pour la pièce, celui-ci étant notamment configuré de manière détachable du gabarit de perçage (1).

15. Gabarit de perçage selon l'une quelconque des revendications 1 à 14, dans lequel le gabarit de perçage est pourvu d'un corps de butée déplaçable dans la direction de la rangée (2a), qui est relié de manière détachable au corps de base, et dans lequel le corps de base est notamment pourvu d'une échelle qui représente une mesure de déplacement longitudinal du corps de butée.
